# EUROPEAN PATENT SPECIFICATION

(11) **EP 0 433 075 B1**
(45) Date of publication and mention of the grant of the patent: **20.04.1994**
(21) Application number: 90313620.8
(22) Date of filing: 13.12.1990
(51) Int. Cl.: A01C 11/02

(54) **Transplanting apparatus**
Pflanzensetzmaschine
Planteuse

(30) Priority: 13.12.1989 GB 8928214
(43) Date of publication of application: 19.06.1991
(73) Proprietor: BRITISH TECHNOLOGY GROUP LIMITED, London SE1 6BU (GB)
(72) Inventor: Reed, John Nicholas, Flitwick, Bedfordshire MK 45 1RU (GB); Boddington, Ian James, Marston Moreteyne, Bedfordshire MK43 OQL (GB)
(74) Representative: Trevor-Briscoe, David William

(56) References cited:
- EP-A- 0 043 427
- EP-A- 0 353 800
- WO-A-87/06791
- DE-A- 3 837 154
- FR-A- 2 453 802

## Description

The present invention relates to transplanting apparatus and in particular to transplanting apparatus for transplanting plants from free-draining matrix trays i.e. from trays in which each plant-containing cell is provided with a drainage hole at the bottom of the cell. In a typical matrix tray there might be twenty rows of twelve cells each, for example.

Hitherto, these plants have been removed from the matrix trays manually, which is a slow and relatively expensive process.

French patent publication No. 2453802 (Kopparfors) discloses the general concept of pneumatically propelling a plant from its pot into a waiting hopper. The hopper has two base plates converging downwardly towards an outlet port. One of these plates is pivotted about its top edge and when functioning as described in the publication, progressively larger cross sections of the plant's conical rootball are engaged by the adjacent bottom edges of two base plates as the pivoted plate is swung away from the other by an appropriate ram. The rootball (and its plant) will pivot upright about its regions of engagement with the two base plates as soon as these latter have separated to such an extent that the weight of the rootball section freed from engagement with the plates exceeds that of the plant and the rootball section yet to be so engaged. On further separation, the hopper base plates will eventually release their grip on the rootball to allow the plant to fall from the hopper root-end first into an appropriate chute for transplanting.

It is an object of the present invention is to provide a system in which plant removal from a matrix tray is performed by machine.

According to the present invention, transplanting apparatus including pneumatic plant expulsion means for expelling a plant from a free-draining container by applying a pneumatically-generated external force to the rootball of the plant, a plant catching chute for catching the expulsed plant and aligning said expulsed plant root-end down for use in a subsequent planting operation, and a means for planting said expulsed plant following alignment by said plant catching chute, is characterised in that the apparatus further comprises support means adapted to hold in place at a number of different heights a vertically-orientated matrix tray in which each plant-containment cell forms said container and is provided with a drainage hole at the bottom of the cell, with the pneumatic plant expulsion means on one side of the tray and the catching chute on the other side of the tray, and indexing means adapted to move in an indexing motion whereby the matrix trays are moved to said different heights so that successive rows of cells in a matrix tray can be presented to the expulsion means one row after the other, the pneumatic plant expulsion means being operative to blow the plant from the tray cell by applying the pneumatically-generated external force to the rootball of the plant but not the parts of the matrix tray adjacent thereto.

Conveniently, the expulsion means includes a nozzle adapted to engage with the drainage holes in the cells.

Conveniently, each chute has a downwardly-tapering top hopper portion and a down tube portion, a back plate extension of said top portion against which plants can be blown from the matrix tray for deflection into the hopper mouth, and one or more side plate extensions of said top portion tapering in side view downwardly towards the matrix tray support means from the top edge of the back plate towards the top edge of the top portion with the down tube portion producing a constriction at the top portion/down tube transition region of the chute.

Conveniently in this last case, there are a plurality of catching chutes adapted to move one after the other in a transverse direction across the width of the matrix tray support means and each said catching chute has only one said side plate extension and this extension is adjacent the trailing side of the chute top portion.

Conveniently, the tray support means comprises a rotary support member for a plurality of the matrix trays disposed around a vertical rotation axis of the rotary support member.

Conveniently, when the expulsion means includes a nozzle adapted to engage with the drainage holes in the cells, then said nozzle is one of a plurality of nozzles at least some of which constitute indexing nozzles and the indexing means includes these indexing nozzles and nozzle drive means operative when the indexing nozzles engage with said drainage holes to move the indexing nozzles in said indexing motion.

Conveniently, in this last case, the plurality of nozzles also includes non-indexing nozzles and the nozzle drive means is operative to withdraw these non-indexing nozzles from the cell drainage holes to allow said indexing motion of the indexing nozzles and thereafter to re-engage the non-indexing nozzles in the cell drainage holes to support the matrix tray in place and thereby allow withdrawal of the indexing nozzles in readiness for the next said indexing movement by said indexing nozzles.

Conveniently, the plant catching chute includes flap means operative as desired either to retain the plant in the chute or controllably to discharge the plant therefrom, and wherein transfer means are provided to move the chute from a plant-catching first location in the apparatus to a plant-releasing second location at which the plant can be discharged from the chute to the planting means.

Conveniently, the flap means comprises a discrete L-shaped part pivoted about a horizontal axis at the top and with its bottom providing the floor portion of the chute.

Alternatively, the flap means may comprise a vertical rear face part pivoted about a horizontal axis at the top and with its lower part forming a trap to catch the falling plant against a tapered front chute section.

Embodiments of the invention will now be described, by way of example only, with reference to the accompanying somewhat diagrammatic drawings in which:
Figures 1,2 and 3 are simplified side, plan and end views of a transplanter according to a preferred embodiment of the invention;
Figure 4 is a simplified perspective view, on a larger scale, of two of the catching chutes used in the apparatus;
Figures 5, 5A and 6 are side, detail and plan views, on larger scales, of the pneumatic expulsion device used in the transplanter;
Figures 7 and 8 are side and plan views, also on a larger scale, of a ground-wheel drive mechanism used in the transplanter; and
Figures 9A and 9B (collectively referred to as "Figure 9") are respectively end and side views (drawn to scale) of an alternative design of catcher chute to those shown in Figure 4.

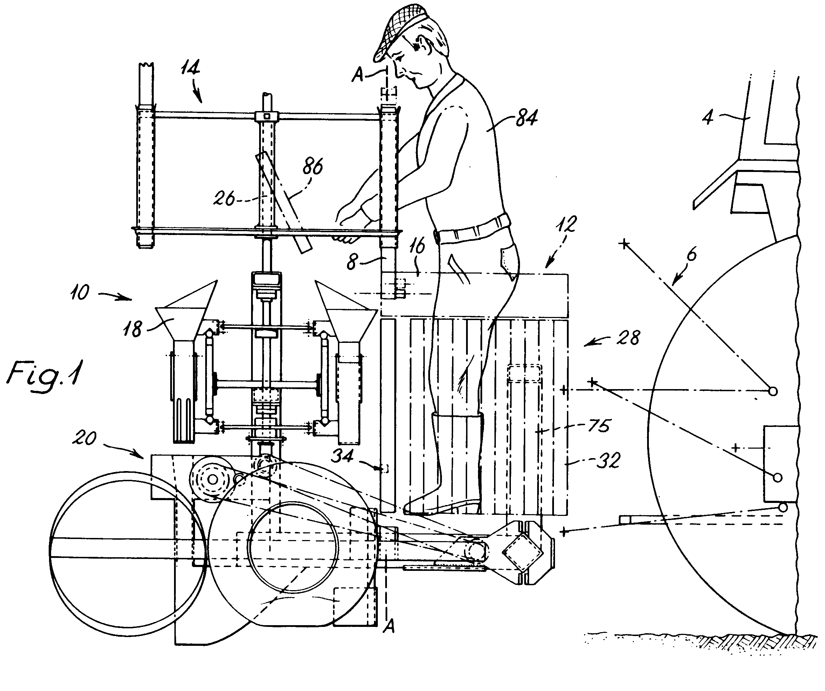

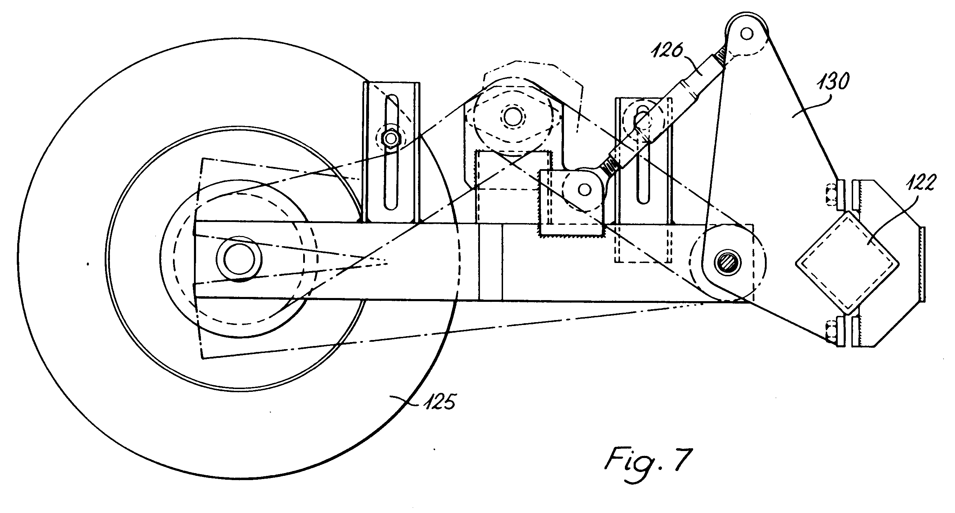

Although the scope of the invention extends to self-powered transplanters having the characteristics of the present invention, the transplanter illustrated in Figures 1 to 8 by way of example, is a mounted machine adapted to be towed by a tractor 4 through the usual three-point linkage 6. Reference numeral 8 indicates the free-draining matrix trays, referred to earlier.

In essence, the illustrated transplanter 10 comprises a pneumatic plant expulsion unit 12, a rotary vertical-tray support 14 adapted to bring each tray in turn before the plant expulsion unit 12, an indexing drive 16 for then moving the trays down row by row in front of the expulsion unit, and a string of plant-catching chutes 18 adapted to deliver to a planter unit 20 the plants expelled by the expulsion unit.

In more detail, turning first to the rotary tray support 14, this comprises a hexagonal-plan rotor cage or "carousel" 22, each side of which is fitted with two vertical tray holders 24 into which full trays 8 can be manually slotted and, if necessary, spring-loaded on to the holder base.

In use, the carousel is driven by a constant force (tensator) spring motor (not shown) in 60° rotations about a central axle 26. This brings successive matrix trays in front of the expulsion unit 12 where they lie in a "reference plane" A-A as referred to earlier in the Specification.

Once empty, each tray will drop, upright, into a receiving unit 28 where a pneumatic ram (not shown) is automatically activated by a microswitch (not shown) to push the empty tray against a spring loaded back plate 32. There it is latched and the ram returns to its original position.

Conveniently, there will be space in unit 28, for up to twelve empty trays, this corresponding to the number of plants required for planting a typical field length.

Each 60° rotation of the carousel is initiated by momentarily disengaging a pneumatic ram-controlled latch (not shown) which locks the carousel in place while the expulsion device is operating. The latching pneumatic ram (not shown) is automatically controlled by a microswitch 34 to link the carousel rotations with the indexing of an almost empty tray.

Conveniently, the spring motor is such as to allow up to twenty five 360° rotations of the carousel before the motor needs rewinding.

In variations, the carousel is driven by pneumatics instead of by constant force springs and/or the carousel contains 336 cell trays (14 cells present in each of 24 rows).

The mechanism for indexing and plant expulsion comprises two manifold units 37,38 supporting twelve nozzles 40 horizontally spaced apart by the same amount as the matrix holes 41 with which they engage. In variations, other nozzle numbers may be used for different trays.

The nozzles are divided into four groups of three nozzles each, with each group carried by an associated manifold block.

For reasons that will become clear, the manifold unit 37 associated with the first and third groups of nozzles will be referred to as a non-indexing manifold while the manifold unit 38 associated with the second and fourth groups of nozzles will be referred to as an indexing manifold.

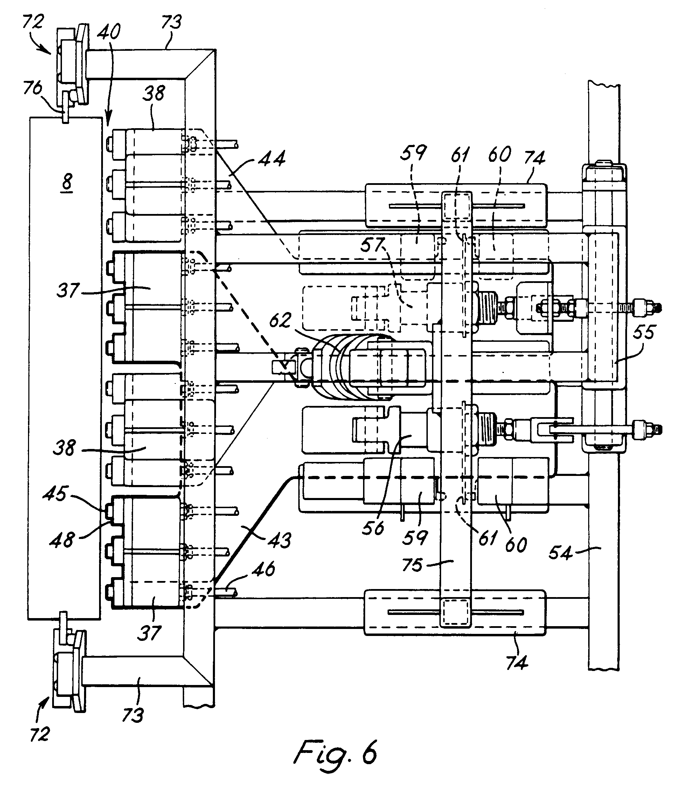

The manifold blocks are carried on the diverging ends of two Y-shaped support plates 43,44 (as shown in Figure 6), the manifold blocks associated with the first and third groups of nozzles extending upwardly from the support plate 43 so as to be able to interdigitate with the underslung manifold blocks associated with the second and fourth groups of nozzles.

Each nozzle 40 includes a 9.5 mm chamfered tube 45 which is fed through a flexible airline 46 from an external pneumatic source (not shown). This latter is programmed to "blow" the various nozzles in a sequence to be described below once the tubes 45 have been engaged in the tray cell drainage holes 41. Different tube sizes could be used with different tray cell drainage holes.

Reference numeral 48 indicates a resilient sealing washer which is compressed when the tube 40 is inserted into a cell drainage hole in the back of the trays.

The support plates 43,44 are mounted for substantially horizontal movement along two pairs of guide rails 52,53 provided by a support frame 54 and a pivoted sub-frame 55.

This horizontal movement is effected by pneumatic placement rams 56,57 of approximately 10 mm stroke. Each placement ram operates under the control of two microswitches 59,60 which cooperate with a striker plate 61 to ensure that the ram extension corresponds to either a "nozzle in" or a "nozzle out" position with regard to the cell holes 41.

In addition to this horizontal movement, the indexing manifold may also be displaced vertically by using a height-adjustment ram 62 to swing the sub-frame 55 about its pivotal connection 64 to support frame 54.

The purpose of this pivoting movement is to be able to align the indexing nozzles of manifold 38 with successive rows of cell holes in the tray 8. However, as this row-to-row spacing will vary somewhat in practice, it is necessary to positively sense the presence of the cell rows rather than to assume that they will occupy certain positions that can be pre-programmed into the machine's controls.

Accordingly, locating ribs (not shown) are conveniently moulded into the side walls of the trays in line with each row of cell holes and these ribs can be engaged by latch units 72 located on two side arms 73 of the sub-frame 55 as will hereinafter be described.

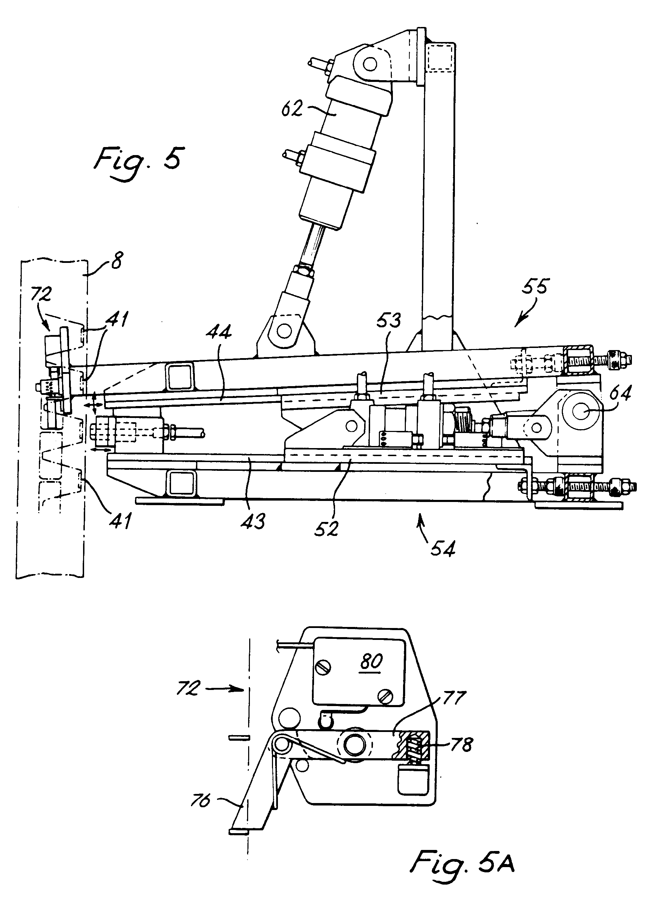

In essence, each of the latch units 72 comprises an outwardly-sprung rib-sensing pawl 76 carried at one end of a centre-pivoted base member 77, the other end of which is upwardly biased by a captive compression spring 78. Each unit also includes a microswitch 80 with its contact engaged by one side of the base member 77 as shown in Figure 5A.

Consider now the operation of the expulsion/indexing unit 12 starting from the situation in which all the nozzles are engaged in the bottom row of cell holes.

In this position, (numbering the nozzles sequentially from right to left in Figure 6), the indexing manifold 38, has already blown out, plant pairs four and ten, five and eleven and six and twelve into the passing catching chutes 18 as the final part of the previous indexing cycle. The signal to blow out each pair of plants comes from reed switches (not shown) activated by magnets mounted on a timing shaft or disk which is synchronised to the motion of the catching chutes as they pass behind the reference plane A-A under the control of drive sprocket 81.

Next, the indexing process proper is begun as the non-indexing manifold is operated in similar fashion to blow out in sequence, plant pairs one and seven, two and eight, and three and nine. While this is happening, the ram 57 withdraws the indexing manifold nozzles from the tray 8 and moves them up by a preset amount equal to more than one row-to-row pitch but less than two.

As the sub-frame 55 pivots up with the indexing manifold during this latter motion, the pawls 76 in latch units 72 will ride over the tray ribs for the next cell row to be evacuated. However, before arriving at the ribs for the row after that, the indexing manifold will reach the limit of its upward travel and the ram 62 will begin to expand again.

The immediate effect of extending ram 62 is to pivot the sub-frame 55 downwardly (substantially without resistance) until the pawls 76 abut with the tray ribs over which they have just passed. This brings the indexing manifold nozzles exactly oppositely the second row of cell holes. At this point, the upward pressure exerted on the pawl 76 by the tray rib, will operate microswitch 80 to signal the ram 57 to extend and push the indexing nozzles into the adjacent cell holes of the second row of holes in the tray.

Thus the nozzles of the non-indexing manifold 37 are now engaged in the cell holes 41 of the first row while those of the indexing manifold 38 are engaged in the cell holes 41 of the second row.

When the horizontal extension of ram 57 is terminated by the associated microswitch 59 engaging the striker plate 61, the microswitch signals the non-indexing nozzles to withdraw from the cell holes. This frees the tray 8 for further downward movement and the ram 62 resumes its expansion to drag the tray down by one pitch when further expansion of the ram is inhibited by a suitable microswitch (not shown). The same switch signals the non-indexing nozzles to extend into the second row.

Both during the downward displacement of the tray 8 and after it has reached its lower limit, the indexing manifold will blow, in sequence, plant pairs four and ten, five and eleven, and six and twelve.

Thus at this point, the nozzles of both manifolds 37,38 are engaged in the back of the same (second) row of the matrix tray and the indexing/plant-expulsion sequence above described can be repeated for this and subsequent rows.

A few rows before the active tray is completely emptied, it actuates a microswitch signalling the carousel to turn 60°. A pneumatic ram then releases a new tray on top of the active tray in readiness for indexing.

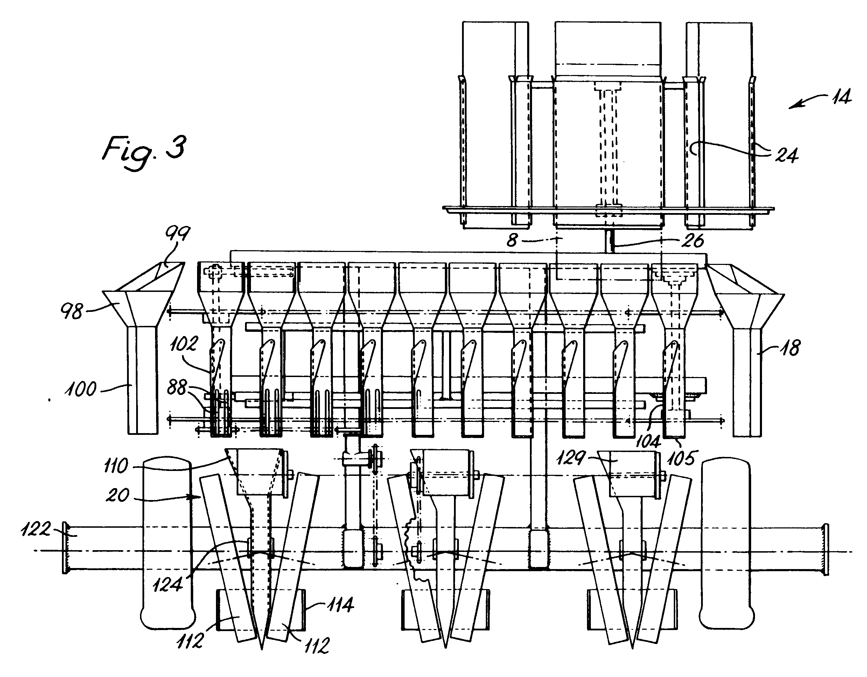

Turning now to Figure 3, it will be seen that the chutes 18 are connected together, by chain 82 to form a conveyor 83. The automatic expulsion/indexing system 16 will take up half the width of the transplanter leaving the other half free for an operator 84 to make good duds. The operator will have his own tray of plants 86 for this purpose and he will also periodically replenish the carousel 22 with six new trays of plants, possibly whilst the transplanter is still moving.

The catching chutes have been designed, with slots 88 in their lower ends so that the operator can see if the chute lacks a plant, in which case he will manually deposit one there from his own supply. These slots are omitted in the simplified view of Figure 5A.

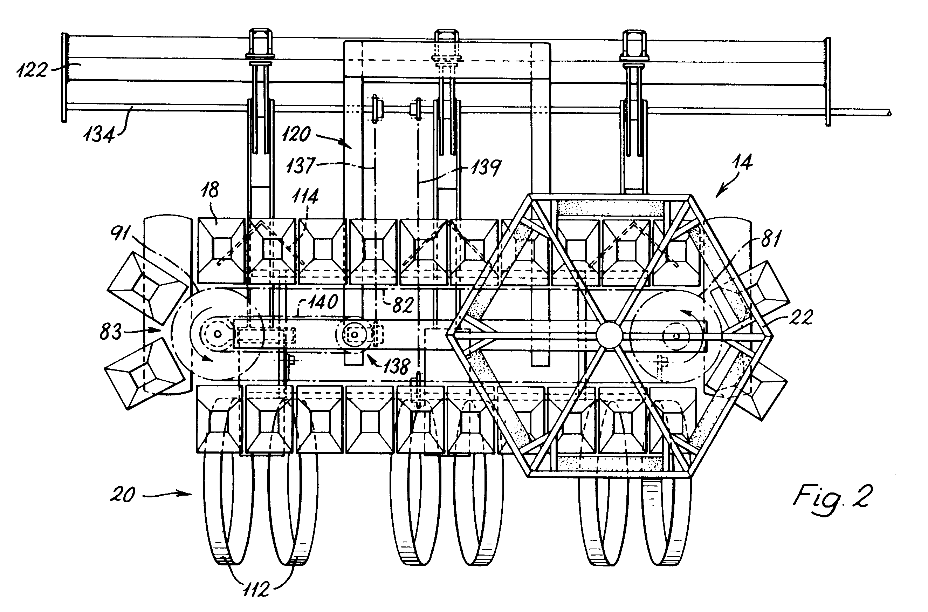

After the catching chutes have received a plant, either automatically or manually, they are conveyed to the left hand side of the machine (as viewed in Figure 2) where they pass around conveyor tensioning sprockets 81,91 before being passed over the three planter units 20.

The features of the catching chutes have been developed to catch the air-ejected plants, to turn the plant upright, to allow the operator to see if a plant is present or not, and to provide a reliable release mechanism for the plant.

As will be seen from Figure 3, each chute comprises a downwardly tapering hopper section 98 the upper edge of which will slope downwardly towards the reference plane A-A when the chute is in a plant-catching position so as to provide a back plate 99 against which plants can be blown from the matrix tray.

As the plants rebound off the hopper back plate, they can be in virtually any orientation and it is a feature of the chutes that the catching hopper is fitted with a down tube 100 which produces a constriction at the hopper/tube shape transition. This constriction catches the plant leaves and thereby causes the plant to be rotated upright. The down-tube has to be of sufficient length to stabilise the orientation of the plants.

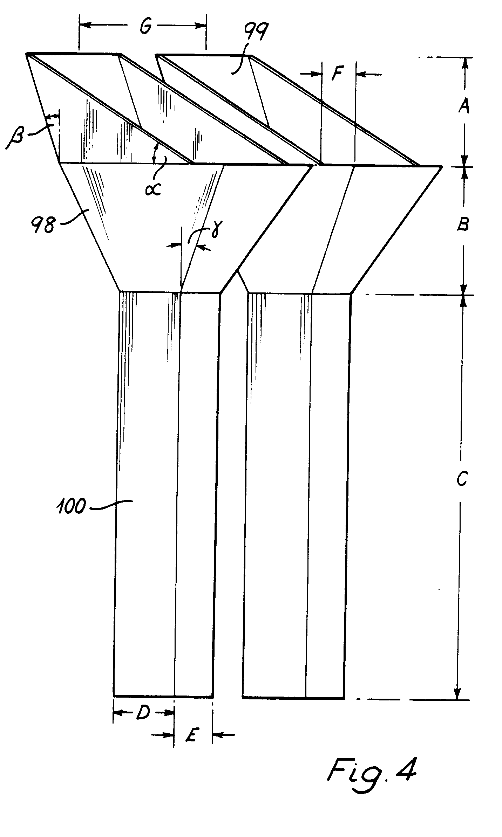

With reference to Figure 4, typical dimensions for the illustrated chutes are A=100-150 mm, B=85-135 mm, C=300-350 mm, D=70 mm (depends on plant size), E=65 mm (depends on plant size), F=15-35 mm, G=165 mm (i.e. 0.5 times the tray width), and the horizontal separation of the catching chute from the adjacent vertical surface of the tray is 5-15 mm at their region of closest approach. Viewed in plan, the top edge of back plate 99 measured parallel to dimension G is 153 mm while the top edge of section 98 (containing dimension F) is 175 mm in length.

Regarding the inclinations of the various parts, angle α lies in the range 20°-35°, angle β lies in the range 10°-35°, and angle γ lies in the range 20°-40°.

It might be desirable to have catching chutes of different dimensions to these if a different tray/plant size system is used. The basic shape requirements would, however, remain essentially the same.

Although not shown in the simplified representation of Figure 4, the down tubes 100 of the catching chutes are each fitted with a top-pivoted L-shaped flap 102 (Figure 3) providing the base portion 105 of the chute. When the chutes 18 are in one of the plant release locations over the planters 20, this flap is swung out to one side at about 15° by the action of a flap-mounted lug (not shown) which contacts a cam-plate as the catching chute moves over the planters 20. The plant is pushed off the base portion by the chute sidewall. Another advantage of this arrangement, is that the flap does not require space below the catching chute in order to open.

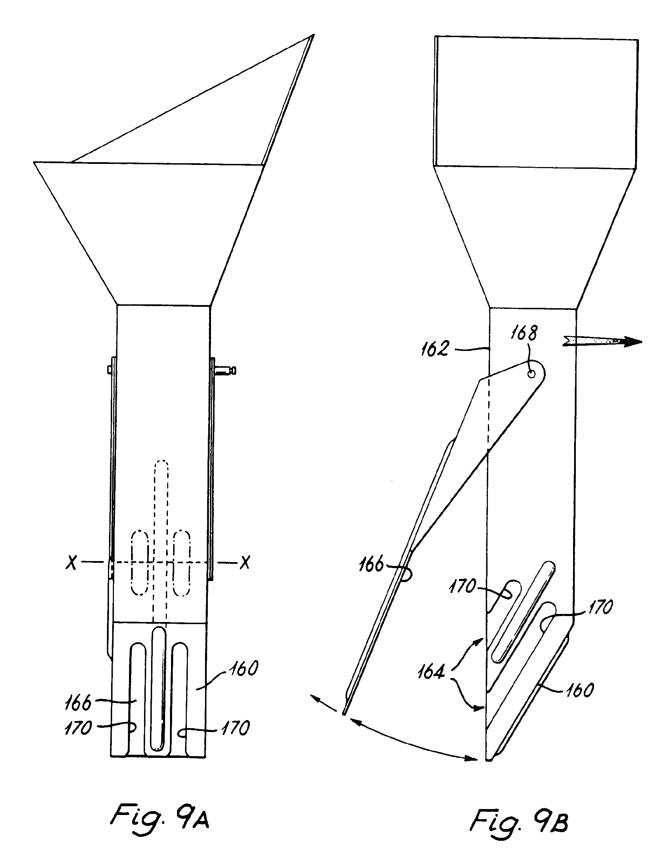

An alternative design of chute to the Figure 4 version is shown in Figure 9. This differs at its lower end from the earlier design in a number of ways.

Firstly, the Figure 9 chute has a closed end 160 and this inclines at 30° to the vertical when seen from the side (as in Figure 9 B). Although the angle of inclination is not critical, a value within the range 25°-35° to the vertical is preferred.

The rear face 162 of the chute terminates at X-X (Figure 9A). Below this, the discharge opening 164 is either closed (Figure 9A) or exposed (Figure 9B) by the hinged flap 166, depending on its orientation about top pivot 168.

One side, and bottom, and optionally also the rear and front faces of the chute are provided with observation slots so that it can be seen whether or not a plant is present in the chute. In addition, these slots reduce stiction between plant and chute. Strengthening ribs may also be provided as indicated.

It will be noted that, whereas in the Figure 4 chute, the triangular-shaped wall section containing the angles α and β comprises a trailing first wall section which is associated with a similarly shaped leading second wall section on the other side of the chute entrance, in the modification of Figure 9, the leading triangular wall section is absent. A similar modification may be made to the Figure 4 chutes, if desired.

In use of the Figure 9 chute, as the plant drops from the top of the chute it falls into the tapering space between fixed, angled front end face 160 of the chute and the vertical rear face in part provided by the flap 166. This forces the plant to remain at all times upright. To release the plant, flap 166 is pivoted rearwards and the plant slides down face 160 and into the associated transplanter unit.

It should be noted that the size of plants able to be handled by the transplanter of which the chutes form a part, is not solely determined by the chutes but is also limited by the ejection and conveying systems employed in the machine.

In more detail, numbering the planter units from left-to-right as viewed in Figure 3, each of the twenty-four plant catching chutes 18 is associated with one of the three planter units 20 such that if one particular chute feeds planter one, say, then the following chute will feed planter two, the chute after that will feed planter three and then the process repeats with the next chute feeding planter one, the chute after that feeding planter two etc.

In alternative embodiments, there are thirty or thirty six chutes 18 (depending on the row widths required).

To reduce the likelihood of blockages with large, strong, leggy or bushy plants, the planter chutes 110 are generously dimensioned. Being wider at their upper ends than is usual with conventional planter equipment, they increase the target drop area for plants released from the chutes 18.

Typically, the upper (hopper) section of the chutes 110 will have a rectangular catching mouth of dimensions 120 to 150 mm in the direction of transplanter motion and 175 to 225 mm widthwise. The hopper section then tapers over a height dimension of 150 to 250 mm to a 60 to 70 mm square downtube section discharging between press rolls 112 preceded by V-form plough shares 114.

Turning now to the constructional details of the machine, the main frame 75 is be made of rolled hollow section and will be adaptable for different categories of three point linkages.

The catching chute conveyor, and carousel assembly etc. are mounted on a ladder frame structure supported by a pair of braced forks 120 extending back from a main frame cross beam 122.

The planter units 20 are each supported from cross beam 122 by a pivoted arm 124 so that angular adjustments of the ground wheel 125 by the turnbuckle 126 to vary the operating depth of the equipment and movement over individual undulations will have no effect on the chain drive to the planter kicker units 139. In addition, both the planter-unit arm 124 and the wheel arm support 130 may be slid along the beam 122 so that inter-row spacings may be altered.

Clearly, for optimum efficiency, the transplanter of the present invention will require exactly co-ordinated timing of tray indexing, plant blowing, catching chute conveyor movement and planter unit kickers and this is provided by timing all of these actions relative to a main layshaft 134 driven from landwheels 125.

Accordingly, the catching chute conveyor 82 is driven off the layshaft 134 via a chain and sprocket connection 137 and a right angle gearbox 138 and chain transmission 140. In a variation, the gearbox 138 etc. are repositioned to take the drive to the righthand side of the machine, rather than to the left as illustrated.

With respect to the planter units kicker mechanism, 129, rather than providing separate chain drives, only the centre unit will take its drive from the main layshaft via chain and sprocket connection 139 and the two outside units will be driven through a telescopic shaft from the centre unit. This will allow convenient change of row widths without having to slide sprockets along shafts etc.

In an alternative arrangement (not shown), the kicker units (which may be of conventional design) are each pneumatically operated and activated by the control system from a common drive instead of being driven by the transplanter's land wheels. The diameter of the press wheels could be smaller so that the overall width of each planter can be made less and the minimum row spacing can be correspondingly reduced. In addition, this new arrangement allows the timing of the kicker units to be maintained at all times (even when an obstructional jam occurs in a kicker unit). Further, it adds flexibility to the operational speed and timing of the kicker units. Lastly, by removing the telescopic drives between each planter unit required when they are driven from the transplanter's land wheels, the new arrangement increases the range of available widths row.

Conveniently, a slip clutch is fitted to the centre unit drive sprocket as this will be useful in adjusting the timing of the kicker action of all three units at once, as well as for overload protection.

To allow for different plant spacings, the speed of the layshaft 134, relative to ground speed, is made adjustable by means of adjustable pulley and chain drive systems 144,146.

In the pulley system, for example, adjustment is by linking an appropriate section of a stepped pulley 147 on the ground wheel hub with the desired one of a number of corresponding pulleys 148 on an intermediate shaft 149. Reference numeral 150 indicates a tensioner for the drive belt 151.

Alternatively, or additionally, different plant spacings may be effected using the chain drive system 146 by linking a chosen one of a set of sprockets 157 on shaft 149 to an appropriate sprocket from a corresponding set of sprockets 152 on the main layshaft 134. Reference numeral 156 indicates an appropriate axially displaceable tensioner sprocket for the chain 158.

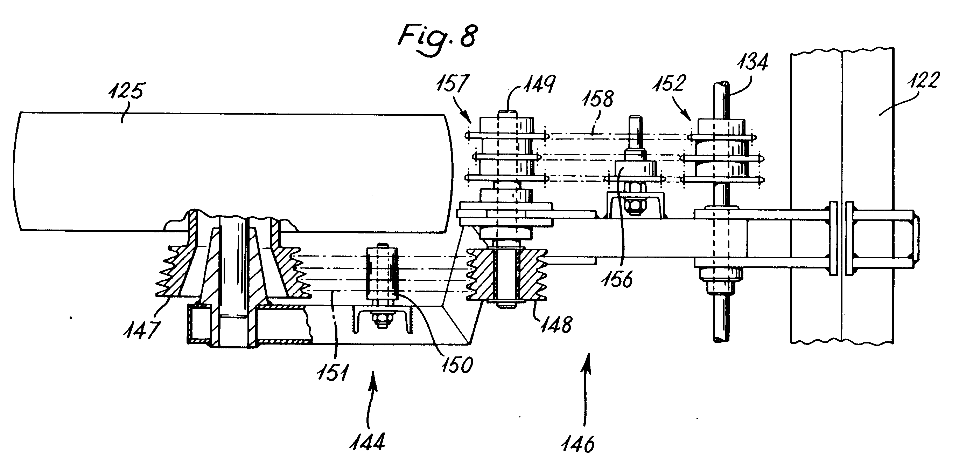

It will be seen that moving the chain 158 allows the relative sizes of the three pairs of sprockets shared between the two shafts 149,134 to provide three different gear ratios between the two shafts (Figure 8).

A freewheeling device is fitted to the wheel arm pulley layshaft 149 to allow the machine to reverse without damaging the transmissions through back driving.

For the pneumatic system, a seven bar compressor system may be incorporated. This will have a nominal capacity of up to 12 cu ft/min (340 litres/min) flow to provide a 7-9 cu ft/min (198-255 litres/min) air curtain at 2 bar, if required, and a 3 cu ft/min (85 litres/min), 5 bar supply for plant ejection, and 7 bar for the tray indexing cylinders, carousel cylinders and tray storage cylinder. Conveniently, the compressor may be powered by the tractor pto shaft via a speed up belt drive.

For the electrical system, a 12 volt DC, tractor-powered electrical system may be used. This system will time the blowing of plants from the tray into the boxes and control the tray indexing and carousel movement.

During plant blowing, the plants will be blown out in pairs as hereinbefore described. The signal to blow a particular pair will come from a magnetic reed switch. This will be activated by a magnet attached to a rotating timing shaft or disc which is synchronized to the movement of the conveyor. In total, there will be six such magnets arranged around the timing shaft which will trigger six reed switches, each of which controls one of six solenoid blowing valves timed to eject plants into pairs of consecutive catching chutes.

In a variation, the magnetic reed switch is instead mounted on structure opposite the tray blowing position. A magnet attached to one of the target pair catching chutes, will actuate a switch as it passes, in close proximity, due to the conveyor movement. The next pair of catching chutes will trigger a second reed switch and so on. In total there will be twelve magnets and six reed switches to cater for all twenty four boxes and twelve tray cell positions. Each reed switch therefore controls the firing of one of the six solenoid air blowing valves.

The signal from every third pair of carrying chutes will be used to control the manifold tray indexing drive 16 described earlier. As the tray indexes down, it eventually triggers a microswitch to instruct the carousel to rotate one sixth of a turn to supply a new tray.

For initial start-up, an electrical override system may be incorporated, to allow the manifold system to be retracted, to load the first tray. It will also allow the system to be reset should a fault occur.

An air curtain may be provided underneath the row of plants about to be ejected, for the purposes of assisting leaf and plant ejection control.

## Claims

1. Transplanting apparatus (10) including pneumatic plant expulsion means (12) for expelling a plant from a free-draining container (8) by applying a pneumatically-generated external force to the rootball of the plant, a plant catching chute (18) for catching the expulsed plant and aligning said expulsed plant root-end down for use in a subsequent planting operation, and a means (20) for planting said expulsed plant following alignment by said plant catching chute (18), characterised in that the apparatus further comprises support means (14) adapted to hold in place at a number of different heights a vertically-orientated matrix tray (8) in which each plant-containment cell forms said container and is provided with a drainage hole (41) at the bottom of the cell, with the pneumatic plant expulsion means (12) on one side of the tray (8) and the catching chute (18) on the other side of the tray, and indexing means (37, 38) adapted to move in an indexing motion whereby the matrix trays (8) are moved to said different heights so that successive rows of cells in a matrix tray (8) can be presented to the expulsion means (12) one row after the other, the pneumatic plant expulsion means (12) being operative to blow the plant from the tray cell by applying the pneumatically-generated external force to the rootball of the plant but not to the parts of the matrix tray (8) adjacent thereto.

2. Transplanting Apparatus (10) as claimed in Claim 1 in which the expulsion means (12) includes a nozzle (40) adapted to engage with the drainage holes (41) in the cells.

3. Transplanting apparatus (10) as claimed in Claim 1 or Claim 2 in which each chute (18) has a downwardly-tapering top hopper portion (98) and a down tube portion (100), a back plate extension (99) of said top portion (98) against which plants can be blown from the matrix tray (8) for deflection into the hopper mouth, and one or more side plate extensions of said top potion (98) tapering in side view downwardly towards the matrix tray support means (14) from the top edge of the back plate (99) towards the top edge of the top portion (98) with the down tube portion (100) producing a constriction at the top portion/down tube transition region of the chute (18).

4. Transplanting apparatus (10) as claimed in Claim 3, in which there are a plurality of catching chutes (18) adapted to move one after the other in a transverse direction across the width of the matrix tray support means (14) and wherein each said catching chute (18) has only one said side plate extension and this extension is adjacent the trailing side of the chute top portion (98).

5. Transplanting apparatus (10) as claimed in any preceding claim in which the tray support means (14) comprises a rotary support member (22) for a plurality of the matrix trays (8) disposed around a vertical rotation axis (26) of the rotary support member (22).

6. Transplanting apparatus (10) as claimed in any preceding claim when including the limitations of Claim 2 in which said nozzle (40) is one of a plurality of nozzles at least some of which constitute indexing nozzles and the indexing means includes these indexing nozzles and nozzle drive means operative when the indexing nozzles engage with said drainage holes to move the indexing nozzles in said indexing motion.

7. Transplanting apparatus (10) as claimed in Claim 6 in which the plurality of nozzles (40) also includes non-indexing nozzles and the nozzle drive means (56, 57) is operative to withdraw these non-indexing nozzles from the cell drainage holes to allow said indexing motion of the indexing nozzles (41) and thereafter to re-engage the non-indexing nozzles in the cell drainage holes (41) to support the matrix tray (8) in place and thereby allow withdrawal of the indexing nozzles in readiness for the next said indexing movement by said indexing nozzles.

8. Transplanting apparatus (10) as claimed in any preceding claim in which the plant catching chute (18) includes flap means (102, 166) operative as desired either to retain the plant in the chute (18) or controllably to discharge the plant therefrom, and wherein transfer means (83) are provided to move the chute (18) from a plant-catching first location in the apparatus to a plant-releasing second location at which the plant can be discharged from the chute to the planting means (20).

9. Transplanting apparatus (10) as claimed in Claim 8 in which the flap means comprises a discrete L-shaped part (102) pivoted about a horizontal axis at the top and with its bottom providing the floor portion of the chute.

10. Transplanting apparatus (10) as claimed in Claim 8 in which the flap means comprises a vertical rear face part (166) pivoted about a horizontal axis (168) at the top and with its lower part forming a trap to catch the falling plant against a tapered front chute section (160).

## Patentansprüche

1. Pflanzmaschine (10) mit einer pneumatischen Pflanzen-Ausstoßvorrichtung (12) zum Ausstoßen einer Pflanze aus einem Behälter (8) mit freiem Abfluß durch Ausüben einer pneumatisch erzeugten äußeren Kraft auf den Wurzelballen der Pflanze, einer Pflanzen-Auffangrutsche (18) zum Auffangen der ausgestoßenen Pflanze und Ausrichten dieser ausgestoßenen Pflanze mit dem Wurzelende nach unten zwecks Verwendung in einem nachfolgenden Pflanzvorgang, und einer Vorrichtung (20) zum Pflanzen der ausgestoßenen Pflanze nach dem Ausrichten mittels der Pflanzen-Auffangrutsche (18), dadurch gekennzeichnet, daß die Maschine ferner umfaßt: eine Haltevorrichtung (14), die ausgebildet ist, eine vertikal orientierte Nährbodenschale (8), in der jede pflanzenenthaltende Zelle den Behälter bildet und mit einer Abflußöffnung (41) am Boden der Zelle versehen ist, in einer Anzahl verschiedener Höhen an Ort und Stelle zu halten, wobei die pneumatische Pflanzen-Ausstoßvorrichtung (12) an einer Seite der Schale (8) und die Auffangrutsche (18) an der anderen Seite der Schale angeordnet ist, und eine Indexvorrichtung (37, 38), die zu einer schrittweisen Bewegung ausgebildet ist, wodurch die Nährbodenschalen (18) auf die verschiedenen Höhen bewegt werden, so daß aufeinanderfolgende Reihen von Zellen in einer Nährbodenschale (8) eine Reihe nach der anderen der Ausstoßvorrichtung (12) dargeboten werden können, wobei die pneumatische Pflanzen-Ausstoßvorrichtung (12) die Funktion hat, die Pflanze durch Ausüben der pneumatisch erzeugten äußeren Kraft auf den Wurzelballen der Pflanze, nicht jedoch auf die an diesen angrenzenden Bereiche der Nährbodenschale (8), aus der Schalenzelle auszustoßen.

2. Pflanzmaschine (10) nach Anspruch 1, in welcher die Ausstoßvorrichtung (12) eine Düse (40) umfaßt, die für den Eingriff in die Abflußöffnungen (41) in den Zellen ausgebildet ist.

3. Pflanzmaschine (10) nach Anspruch 1 oder Anspruch 2, in welcher jede Rutsche (18) einen sich nach unten verjüngenden Trichter-Kopfabschnitt (98) und einen Fallrohrabschnitt (100), eine Rückenplatten-Verlängerung (99) des Kopfabschnittes (98), gegen welche Pflanzen aus der Nährbodenschale (8) zwecks Ablenkung in die Trichtermündung geblasen werden können, und eine oder mehrere Seitenplatten-Verlängerungen des Kopfabschnittes (98) umfaßt, die bei seitlicher Betrachtung nach unten in Richtung der Nährbodenschalen-Haltevorrichtung (14) vom oberen Rand der Rückenplatte (99) zum oberen Rand des Kopfabschnittes (98) schräg verlaufen, wobei der Fallrohrabschnitt (100) im Kopfabschnitt/Fallrohrabschnitt-Übergangsbereich der Rutsche (18) eine Verengung hervorruft.

4. Pflanzmaschine (10) nach Anspruch 3, in welcher mehrere Auffangrutschen (18) vorhanden und so ausgebildet sind, daß sie sich eine nach der anderen in Querrichtung über die Breite der Nährbodenschalen-Haltevorrichtung (14) bewegen, und wobei jede Auffangrutsche (18) lediglich eine Seitenplatten-Verlängerung aufweist und diese Verlängerung an die hintere Seite des Rutschen-Kopfabschnittes (98) angrenzt.

5. Pflanzmaschine (10) nach wenigstens einem vorhergehenden Anspruch, in welcher die Schalen-Haltevorrichtung (14) ein drehbares Halteelement (22) für mehrereNährbodenschalen (8) umfaßt, die um eine vertikale Drehachse (26) des drehbaren Halteelementes (22) herum angeordnet sind.

6. Pflanzmaschine (10) nach wenigstens einem vorhergehenden Anspruch, wenn die Beschränkungen des Anspruches 2 einbezogen sind, in welcher die Düse (40) eine von mehreren Düsen ist, von denen wenigstens einige Index-Düsen darstellen, und die Index-Vorrichtung diese Index-Düsen sowie eine Düsen-Antriebseinrichtung umfaßt, die bei Eingriff der Index-Düsen in die Abflußöffnungen in Funktion ist, um die schrittweise Bewegung der Index-Düsen durchzuführen.

7. Pflanzmaschine (10) nach Anspruch 6, in welcher die Mehrzahl der Düsen (40) ferner Nichtindex-Düsen umfaßt und die Düsen-Antriebseinrichtung (56, 57) die Funktion hat, diese Nichtindex-Düsen aus den Zellabflußöffnungen zurückzuziehen, um die schrittweise Bewegung der Index-Düsen (41) zu ermöglichen, und anschließend die Nichtindex-Düsen erneut in Eingriff in die Zellabflußöffnungen (41) zu bringen, um die Nährbodenschale (8) in ihrer Lage zu halten und dadurch das Zurückziehen der für die nächste schrittweise Bewegung durch die Index-Düsen bereitstehenden Index-Düsen zu ermöglichen.

8. Pflanzmaschine (10) nach wenigstens einem vorhergehenden Anspruch, in welcher die Pflanzen-Auffangrutsche (18) eine Klappeneinrichtung (102, 106) umfaßt, die je nach Wunsch die Funktion hat, entweder die Pflanze in der Rutsche (18) zurückzuhalten oder die Pflanze gesteuert aus dieser herauszulassen, und in der eine Überführungseinrichtung (83) vorgesehen ist, um die Rutsche (18) von einer pflanzenauffangenden ersten Stelle in der Maschine zu einer pflanzenfreigebenden zweiten Stelle zu bewegen, an der die Pflanze aus der Rutsche an die Pflanzvorrichtung (20) abgegeben werden kann.

9. Pflanzmaschine (10) nach Anspruch 8, in welcher die Klappeneinrichtung einen gesonderten L-förmigen Teil (102) umfaßt, der um eine horizontale Achse am oberen Ende schwenkbar ist und mit seinem unteren Ende den Bodenabschnitt der Rutsche bildet.

10. Pflanzmaschine (10) nach Anspruch 8, in welcher die Klappeneinrichtung einen vertikalen Rückseiten-Teil (166) umfaßt, der um eine horizontale Achse (168) am oberen Ende schwenkbar ist und mit seinem unteren Abschnitt eine Klappe zum Festhalten der fallenden Pflanze an einem schrägen vorderen Rutschenabschnitt (160) bildet.

## Revendications

1. Repiqueuse (10) comprenant des moyens pneumatique d'expulsion des plants (12) pour expulser un plant d'un conteneur à drainage libre (8) en appliquant une force extérieure produite pneumatiquement sur la motte de racines du plant, une goulotte de retenue des plants (18) pour saisir le plant expulsé et aligner ce plant expulsé extrémité racines vers le bas pour être utilisé dans une opération de plantation ultérieure, et un dispositif (20) pour planter ce plant expulsé après alignement par la goulotte de retenue des plants (18), caractérisée en ce que la repiqueuse comprend en outre des moyens supports (14) adaptés pour tenir en place, au niveau d'un certain nombre de hauteurs différentes, un plateau matrice orienté verticalement (8) dans lequel chaque cellule contenant un plant constitue ce conteneur et comporte un trou de drainage (41) au fond de la cellule avec les moyens pneumatiques d'expulsion des plants (12) sur un côté du plateau (8) et la goulotte de retenue (18) sur l'autre côté du plateau, et des moyens d'indexation (37,38) adaptés pour se déplacer en un mouvement d'indexation, d'où il résulte que les plateaux matrices (8) sont déplacés à ces différentes hauteurs de façon que des rangées différentes de cellules dans un plateau matrice (8) puissent être présentées aux moyens d'expulsion (12), une rangée après l'autre, les moyens pneumatiques d'expulsion des plants (12) étant opérationnels pour souffler le plant hors de la cellule du plateau en appliquant la force extérieure produite pneumatiquement sur la motte de racines du plant, mais non pas sur les parties du plateau matrice (8) adjacentes à celle-ci.

2. Repiqueuse (10) selon la revendication 1, dans laquelle les moyens d'expulsion (12) comportent une buse (40) adaptée pour coopéer avec les trous de drainage (41) des cellules.

3. Repiqueuse (10) selon la revendication 1 ou la revendication 2, dans laquelle chaque goulotte (18) a une portion de trémie supérieure se rétrécissant vers le bas (98) et une portion de tube de descente (100), un prolongement de cette portion supérieure (98) sous forme de plaque arrière (99) contre laquelle les plants peuvent être soufflés du plateau matrice (8) pour être déviés dans l'embouchure de la trémie, et un ou plusieurs prolongements de cette portion supérieure (98) sous forme de plaques latérales se rétrécissant, en vue latérale, vers le bas en direction des moyens supports (14) du plateau matrice depuis le bord supérieur de la plaque arrière (99) en direction du bord supérieur de la portion supérieure (98) avec la portion de tube de descente (100) produisant un rétrécissement au niveau de la zone de transition entre la portion supérieure et le tube de descente de la goulotte (18).

4. Repiqueuse (10) selon la revendication 3, dans laquelle il existe une multiplicité de goulottes de retenue (18) adaptées pour se déplacer l'une après l'autre dans une direction transversale en travers de la largeur des moyens supports (14) du plateau matrice et dans laquelle chaque goulotte de retenue (18) a seulement un prolongement sous forme de plaque latérale et dans laquelle ce prolongement est adjacent au bord arrière de la portion supérieure (98) de la goulotte.

5. Repiqueuse (10) selon l'une des revendications précédentes, dans laquelle les moyens supports de plateaux (14) comprennent un élément support tournant (22) pour une multiplicité de plateaux matrices (8) disposés autour d'un axe de rotation vertical (26) de cet élément support rotatif (22).

6. Repiqueuse (10) selon l'une des revendications précédentes, comprenant les limitations de la revendication 2, dans laquelle la buse (40) est l'une d'une multiplicité de buses dont au moins certaines constituent des buses d'indexation, les moyens d'indexation comprenant ces buses d'indexation, et des moyens d'entraînement de buses rendus actifs lorsque les buses d'indexation coopèrent avec les trous de drainage pour déplacer les buses d'indexation dans ce mouvement d'indexation.

7. Repiqueuse (10) selon la revendication 6, dans laquelle la multiplicité de buses (40) comportent également des buses de non-indexation et les moyens d'entraînement de buses (56,57) sont actifs pour retirer ces buses de non-indexation des trous de drainage des cellules pour permettre le mouvement d'indexation des buses d'indexation (41) et pour réintroduire ensuite les buses de non-indexation dans les trous de drainage de cellules (41) pour supporter en place le plateau matrice (8) et permettre ainsi de retirer les buses d'indexation pour qu'elles soient prêtes pour le mouvement d'indexation suivant par les buses d'indexation.

8. Repiqueuse (10) selon l'une des revendications précédentes, dans laquelle la goulotte de retenue des plants (18) comporte un volet (102,166) rendu opérationnel à volonté, soit pour retenir le plant dans la goulotte (18), soit pour en décharger par commande le plant, et dans laquelle des moyens de transfert (83) sont prévus pour déplacer la goulotte (18) depuis un premier emplacement dans l'appareil pour saisir les plants jusqu'à un deuxième emplacement pour libérer les plants, deuxième emplacement auquel le plant peut être déchargé de la goulotte dans les moyens de plantation (20).

9. Repiqueuse (10) selon la revendication 8, dans laquelle le volet comprend une partie individuelle en forme de L (102) articulée autour d'un axe horizontal à sa partie supérieure, son fond constituant la portion de plancher de la goulotte.

10. Repiqueuse (10) selon la revendication 8, dans laquelle le volet comprend une partie de face arrière verticale (166) articulée autour d'un axe horizontal (168) à sa partie supérieure, sa partie inférieure constituant un piège pour saisir le plant tombant contre une section de goulotte avant inclinée (160).
